# EUROPEAN PATENT APPLICATION

(11) **EP 4 597 968 A1**
(43) Date of publication of application: **06.08.2025**
(21) Application number: 25154614.9
(22) Date of filing: 29.01.2025
(51) Int. Cl.: H04L 41/16, H04L 43/0876, H04L 47/125

(54) **NETWORK PERFORMANCE MONITORING AND OPTIMIZATION USING BURSTY DATA DELIVERY MEASUREMENT**

(30) Priority: 05.02.2024 US 202418432334
(71) Applicant: Opanga Networks, Inc., Bellevue, WA 98008 (US)
(72) Inventor: HADORN, Ben, Bellevue, WA, 98008 (US); BURNETTE, John, Bellevue, WA, 98008 (US)
(74) Representative: Herrero & Asociados, S.L.

(57) **Abstract**

Managing a data communication network comprises detecting a bursty data transfer, inferring, using machine learning, a flow burst and pause profile of the bursty data transfer using measurements of the bursty data transfer, and managing the data communication network according to the flow burst and pause profile. Managing the data communication network may include managing the bursty data transfer, managing other data transfers, or both according to the flow burst and pause profile. By using the flow burst and pause profile, the desired performance for the burst data transfer may be more readily achieved and the resources of the data communication network may be more efficiently used.

## Description

### BACKGROUND

Existing techniques for monitoring and optimizing network performance are facing new challenges as new features of networks make it more difficult to identify and classify data traffic in the network.

For example, network monitoring and data transfer optimization technologies that rely on identifying an endpoint of a data transfer (such as by using DNS "spying" and/or reverse-matching) to optimize delivery of the data transfer may soon be made obsolete by the adoption of technologies such as TLS 1.3 that encrypt the names of endpoints in Domain Name System (DNS) requests. For another example, network monitoring and optimization technologies that rely on Deep Packet Inspection (DPI) may soon be made obsolete by the adoption of end-to-end encryption of data transfers.

Accordingly, a monitoring and optimizing technique that, for example, treats a data packet as part of a video transfer if the source of the data transfer is an entity (such as YouTube^{®}) that primarily serves video, may fail for lack of any way of identifying the entity corresponding to the IP address of the source.

Accordingly, there is a need for new technologies that support monitoring and optimizing network performance and optimizing network data delivery.

### BRIEF SUMMARY OF THE DISCLOSURE

An objective of the disclosed embodiments is to use analysis of the behavior of data transfers in a network to manage and optimize the delivery of those data transfers. In an environment with a mix of traditional data transfer and bursty transfer applications, bursty data performance measurement and optimization may be used to identify and adapt data transport policies responsible for performance measurement and optimization.

In an embodiment, a method comprises detecting a bursty data transfer on a data communication network, inferring, using machine learning, a flow burst and pause profile of the bursty data transfer using measurements of the bursty data transfer, and managing the data communication network according to the flow burst and pause profile.

In embodiments of the method, the inferring is done using a neural network trained to recognize the flow burst and pause profile from inputs comprising the measurements of the bursty data transfer. The inputs may also include a prior flow burst and pause profile.

In embodiments of the method, managing the data communication network according to the flow burst and pause profile comprises managing the bursty data transfer according to the flow burst and pause profile, managing a data transfer other the bursty data transfer according to the flow burst and pause profile, or both.

In embodiments of the method, the measurements of the bursty data transfer may include one or burst duration measurements, one or more burst size measurements, one or more pause duration measurements, or combinations thereof.

In embodiments of the method, the flow burst and pause profile includes an inference of a data type being carried by the bursty data transfer, an inferred target burst duration, an inferred target burst size, an inferred target pause duration for the bursty data transfer, or combinations thereof.

Embodiments may also include a non-transitory computer readable medium having computer-executable instructions embodied thereon that when executed by at least one processor cause the processor to perform one or more of the methods described above.

Embodiments may also include a system including at least one processor and configured to perform one or more of the methods described above.

### BRIEF DESCRIPTION OF THE DRAWINGS

FIG. 1 illustrates a communication network according to an embodiment.
FIG. 2 illustrates a continuous data transfer.
FIG. 3 illustrates a bursty data transfer and corresponding process according to an embodiment.
FIG. 4 illustrates a process for monitoring data transfers according to an embodiment.
FIG. 5 illustrates a process for monitoring and optimizing a network using data transfer monitoring according to an embodiment.
FIG. 6 illustrates an apparatus for monitoring data transfers, monitoring and optimizing a network using data transfer monitoring, or both according to an embodiment.
FIG. 7 illustrates in simplified form a neural network according to an embodiment.

### DESCRIPTION

Embodiments relate to data communication network monitoring and optimization. In particular, embodiments relate to distinguishing bursty data sessions from continuous data sessions on the network, measuring the performance of the bursty data sessions, and inferring information related to managing and optimizing the bursty data sessions in order to increase the accuracy of network monitoring and improve the optimization of network data delivery.

Embodiments include a system that detects a bursty data transfer on a data communication network, infers, using machine learning, a flow burst and pause profile of the bursty data transfer using measurements of the bursty data transfer, and manages the data communication network according to the flow burst and pause profile.

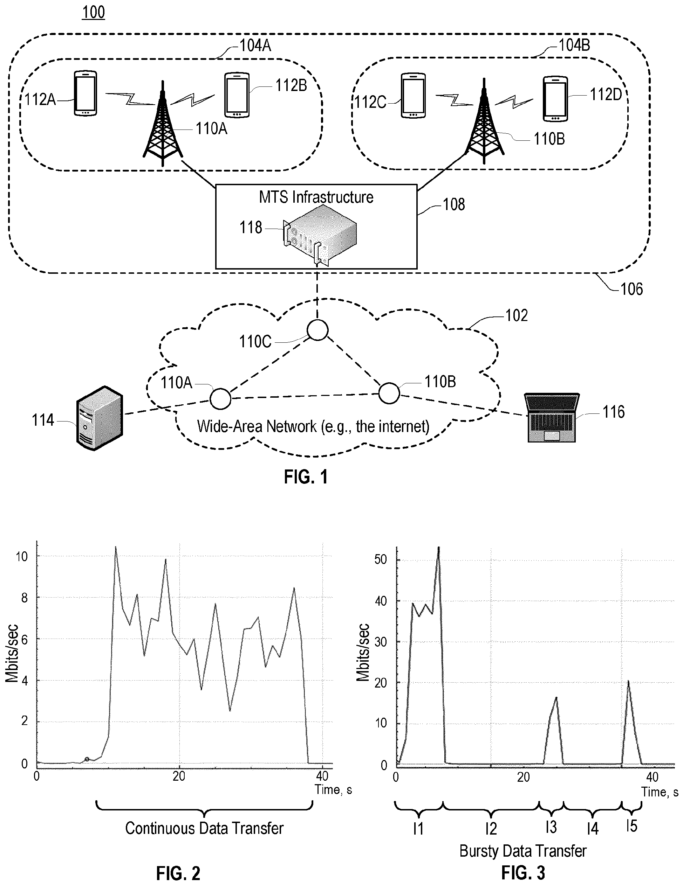

FIG. 1 illustrates a communication network 100 according to an embodiment. The communication network 100 includes a Wide-Area Network (WAN) 102 (for example, the Internet), a mobile telecommunication system (MTS) 106, a server 114 attached to the WAN 102, and a personal computing device 116 attached to the WAN 102. The MTS 106 includes an MTS infrastructure 108 that connects first and second Radio Access Networks (RANs) 104A and 104B to each other and to the WAN 102. The MTS infrastructure 108 may include a gateway 118 through which communications between the WAN 102 and the MTS 106 are performed.

The WAN 102 includes a plurality of routers 110A, 110B and 110C, all in direct or indirect communication with each other. The routers 110A, 110B, and 110C operate at a networking layer of a protocol stack to route packets; for example, at the Internet Protocol (IP) layer of a Transmission Control Protocol/Internet Protocol (TCP/IP) protocol stack. The routers 110A, 110B, and 110C perform their functions using information provided in the IP headers of an IP datagram.

The gateway 118 connects to the third router 110C and operates at a transport layer or higher of a protocol stack. For example, the gateway 118 may operate using information in User Datagram Protocol (UDP) headers, TCP headers, and/or other transport layer protocol headers, the transport layer protocol headers being encapsulated in the IP data of IP datagrams.

For example, the gateway 118 may also function as an aggregation point for the RANs 104A and 104B. Furthermore, the gateway 118 may provide transport management and monitoring and control functions for the RANs 104A and 104B, and providing transport optimization for the MTS 106, including, for example, real-time optimization of fair-share transport protocols in response to congestion in the MTS 106. The gateway 118 may communicate with the RANs 104A and 104B through a backhaul network.

The first RAN 104A includes a base station 120A and a plurality of User Equipment (UEs) 112A and 112B wirelessly communicating with the first base station 120A over one or more shared radio-frequency (RF) resources of the first RAN 104A. The second RAN 104B includes a base station 120B and a plurality of UEs 112C and 112D wirelessly communicating with the second base station 120B over one or more shared RF resources of the second RAN 104B. The UEs 112A to 112D communicate with the WAN 102 via the base stations 120A and 120B and the gateway 118. The base stations 120A and 120B may be Evolved Node Bs (eNodeBs), Base Transceiver Stations (BTSs), or the like, and the UEs 112A to 112D may be cellular phones, tablets, wireless hotspots, computers with cellular modems, or the like, but embodiments are not limited thereto.

The MTS infrastructure 108 may include communications links (for example, a coaxial cable, fiber optic cable, or the like, or combinations thereof) connecting the first base stations 120A, the second base station 120B, and the gateway 118. The MTS infrastructure 108 may include resources for implementing embodiments of the present disclosures; in embodiments, those resources may include the gateway 118.

The server 114 may provide services to devices connected to the WAN 102. Examples of services that may be provided include cloud computing, cloud storage, social networking, streaming video, and the like.

The personal computing device 116 may be a desktop computer, a laptop computer, a streaming device, a gaming console, or the like.

The personal computing device 116 and each of the UEs 112A to 112D may execute an application that perform data transfers with other entities (such as the server 114) of the communication network 100. The data transfer may be performed using a data session comprising a plurality of data packets. An entity monitoring a network may identify data packets having the same endpoint addresses as being part of the same data session. The endpoint addresses respectively identify a source and a destination for each data packet, and in a network using the Internet Protocol (IP), each endpoint address comprises an IP address and a port number.

The application may interact with the communication network 100 by requesting the entirety of a file, which may result in a continuous data transfer such as shown in FIG. 2.

By "continuous" it is meant that there is substantial data transferred in every interval corresponding to a measurement segment during the period when the data transfer takes place; accordingly, the continuous data transfer may comprise a plurality of distinct data packets transmitted with brief (that is, substantially shorter than the measurement segment) gaps between each data packet.

For an illustrative but non-limiting example, a continuous data transfer on a Gigabit Ethernet network may include data packets each having durations of 0.5 to 90 microseconds, with inter-packet/inter-burst gaps greater than or equal to 96 nanoseconds, and monitoring of the network may be done using a measurement segment of 1 millisecond.

An entity monitoring a network may identify data packets within the continuous data transfer as being part of the same data session when the data packets all have the same endpoint addresses.

The application may also interact with the communication network 100 by requesting segments of a file as needed, with substantial pauses in between the requests, wherein a substantial pause is a pause longer than a measurement segment. For example, a mobile video application may request seconds 30-35 of the video to be delivered from the server into a buffer, and then may pause for a period of time before requesting seconds 35-40. This may result in a bursty data transfer such as shown in FIG. 3. This burst and wait behavior confounds traditional performance measurement and optimization practices because it breaks from the paradigm of a continuous data transfer.

In the bursty data transfer shown in FIG. 3, each interval of transmission (first interval I1, third interval I3, and fifth interval 15) comprises one or more data packets used to perform the data transfer. The data packets in the first, third, and fifth intervals I1, I3, and 15 may all have the same endpoint addresses. Accordingly, an entity monitoring a network may identify data packets in the first, third, and fifth intervals I1, I3, and I5 as all being part of the same data session.

For any data transfer, the application can always be bursty, as described above, or may transition from a traditional continuous profile to a burst and wait profile during the transfer. This behavior is not specific to a particular application or transport protocol. Likewise, a bursty data session may revert to continuous transfer due to degraded network performance that no longer supports a bursty transfer profile.

Embodiments identify and adapt data transport policies responsible for Performance Measurement and Optimization to operate in an environment with a mix of traditional continuous data transfer and bursty data transfer applications.

Historically data performance measurement and optimization relied on continuous data transfers to measure application performance. For example, a data transfer may proceed continuously, as shown in FIG. 2, and measurement of the data transfer historically was performed by starting measurement when the data transfer is detected and performing second-by-second measurements of the data transfer's performance until a pause in the data transfer occurred. Upon detecting the pause, the monitoring of the data transfer stopped and the overall performance for the data transfer was reported.

A data transfer on a network may be referred to as a flow or a data flow, and the terms "data transfer," "flow", and "data flow" may be used interchangeably in this disclosure.

When an application uses bursty data sessions the historical measurement practices are no longer viable because there may not be any continuous data transfer in which to sample performance. Both the gaps in data transmission and the non-uniform nature of the bursts within applications and between applications requires a dynamic burst detection and adaptive performance measurement implementation that can learn in real time burst behavior for a given data session so that a performance measurement can be taken as well as optimization within each burst window.

An embodiment of the present disclosure identifies that a data session is bursty by observing pauses in data transfers for that particular data session. The data session may correspond to, for example, a UE request to a content server, such as a smartphone requesting a YouTube video from a YouTube server. This data session may consist of one or more network connections irrespective of the underlying transport protocol.

The data session shown in Figure 3 shows a data transfer that begins as a continuous transfer and then transitions to what is considered a bursty session. Once a session is determined to be or have become a bursty session, a Machine Learning (ML) Bursty Flow Inference Engine is used to classify the real time burst-and-wait behavior.

This classification produced by the (ML) Bursty Flow Inference Engine may be used to partition the data transfer into multiple segments, such as one or more performance measurement segments interleaved with one or more optimization segments. The duration of each such segment may be determined based on the inferences of the ML Bursty Flow Inference Engine, on statistics calculated from measurements, or a combination thereof, and may relate to burst duration and burst size.

A duration of a burst in a data transfer may be measured starting when a first packet of the burst is observed and ending when packets of the data transfer have not been observed over a given time interval (for example, 1 millisecond). In an embodiment, a size of a burst may be determined by summing sizes of the packets, a total number of packets, or both of the data transfer that occurred within that duration.

Each burst duration may be analyzed in conjunction with previous and subsequent burst durations to identify a target burst duration. In an embodiment, the target burst duration may be determined by calculating a median, an average, a 90% percentile duration, or the like of the observed burst durations. In another embodiment, the target burst duration may be inferred by the ML Bursty Flow Inference Engine based on the inputs (described below) provided to the ML Bursty Flow Inference Engine. The target burst duration will typically be related to the data transfer application that initiated the data transfer.

A target burst size may be determined using means analogous to those described for the target burst duration.

In addition to measuring burst durations and sizes and determining the target burst duration and size, embodiments may also measure pause durations and determine a target pause duration. Each pause duration may be calculated starting when there are no longer data packets of a data transfer over a given time interval (for example, 1 millisecond) and ending when the next data packet of that data transfer is received. The target pause duration may then be calculated in a manner similar to the target burst duration, such as by, for example, calculating a median, an average, a 90% percentile duration, or the like of the observed pause durations, or based on the output of the ML Bursty Flow Inference Engine.

In embodiments, the target pause duration may be used for distinguishing when a data session transfer has completed as opposed to the data session entering a pause, to optimize other data sessions on the same transport network by accelerating transfers of those other data sessions during anticipated bursty data session pauses, or both, but embodiments are not limited thereto.

Figure 3 shows an example wherein an embodiment partitions a data session into a performance measurement segment and an optimization segment. Specifically, the first and second intervals I1 and I2 correspond to the performance measurement segment, and the third, fourth, and fifth intervals I3, I4, and I5 correspond to the optimization segment.

Specifically, in the first interval I1, the embodiment makes an initial assumption that the data session is a continuous data session. In light of this initial assumption, the embodiment therefore optimizes and performs measurements of the data session during the first interval I1 in accordance with a continuous data transfer policy.

At the beginning of the second interval I2, a first substantial pause in the data transfer is observed. In response, the embodiment switches to performing measurements of the data session during the second interval I2 according to a bursty data transfer policy. Furthermore, an ML bursty flow inference engine may begin pause and burst profiling for the data session.

In the third interval I3, data packets of the data session are again detected. In response, the embodiment optimizes and performs measurements on the data session in accordance with the bursty data transfer policy, and updates parameters controlling the bursty data transfer policy according to the observed burst and pause durations.

In the fourth interval I4, a second substantial pause in the data transfer is observed. The embodiment in response continues to perform measurements of the data session according to a bursty data transfer policy and continues to update the parameters controlling the bursty data transfer policy according to the measurements.

In the fifth interval I5, data packets of the data session are again detected. In response, as in the third interval I3, the embodiment optimizes and performs measurements on the data session in accordance with the bursty data transfer policy, and updates parameters controlling the bursty data transfer policy area according to the observed burst and pause durations.

The performance measurement segment may determine performance by, for example, calculating the mean performance, sampling the measurement segment into smaller buckets (for example, by breaking a measurement segment of 1s into ten 100 millisecond measurement subsegments) and then determining a median, percentile, or quartile of the measurements in the subsegments, or the like, but embodiments are not limited thereto.

The ability to distinguish bursty data sessions from continuous data session and/or to perform measurements of unique characteristics of the bursty data sessions may find applications, for example, accounting and billing, optimization, network slicing, etc. This submission discloses an optimizing implementation that dynamically manages the rate at which a bursty data session is transmitted through the data network, but other optimizations may include but are not limited to blocking bursty data sessions, limiting their upper performance, ensuring minimum performance for them, time-based optimization of them, maintain a target average rate for them, performing congestion avoidance for them, and so on, which optimizations may be deployed solely or in combination with each other.

In some scenarios one or more measurements of current network performance (including but not limited to the current data transfer rate, latency, packet send/receive interval, jitter, and so on) may be used by an optimization engine to decide whether optimization of a bursty data session is required. Once the optimization engine determines that optimization is required, the duration and magnitude of the optimization must be determined based on a target burst duration calculation and taking into account the remaining size and time of the data burst (that is, the magnitude of the opportunity for optimization). Embodiments may also measure the standard deviation of the target pause duration, and if that measurement decreases by a threshold amount, may infer that the network being measured is no longer providing suitable performance to sustain the current Quality of Experience (QoE) level of a bursty data flow. In an illustrative embodiment, in response to determining that the current QoE is not sustainable, the embodiment may cause a notification to be sent to a participant in the bursty data flow that the QoE level is not currently sustainable; may request, advise, or initiate a re-routing of the bursty data flow to a higher performing path through the network; may request, advise, or initiate adjustment of network flow control parameters for the bursty data flow; or combinations thereof, but embodiments are not limited thereto.

In an illustrative embodiment, in a case where the default target optimization duration is 2 seconds and optimization policy enforces an average transfer rate of `x' over the entire bursty data transfer duration (including both the measurement segment and the optimization segment), the optimization engine may learn from the Bursty Flow Inference Engine that only 1 second of data transfer is expected to remain. Accordingly, the duration of the optimization to be applied to the bursty data transfer may be changed from the default target optimization duration of 2 seconds to 1 second, and the magnitude of the optimization may be increased to twice the magnitude that would be used if the default target optimization duration had been available. Otherwise, if the optimization was not adapted to the inferred burst size and timing, then the optimization might at times fail to apply an optimization of sufficient magnitude to a bursty data session and would therefore be unable to achieve the target optimized performance for that bursty data session.

Some bursty data sessions do not interact with the network in accordance with a distinct burst and wait behavior and instead sometimes have insignificant amounts of data transferred between meaningful data bursts. In embodiments, these insignificant data transfer occurrences may be omitted from measurement and optimization behavior because the rate and amount of data transferred in them does not substantially affect network or application performance.

In embodiments, the difference between significant and insignificant data bursts may be determined using a standard deviation of burst sizes, wherein any burst that has a size or duration that is `x' standard deviations below a mean size or duration is considered insignificant. In other embodiments, a minimum size threshold, a minimum transfer rate threshold, or both may be used to determine whether a burst is insignificant.

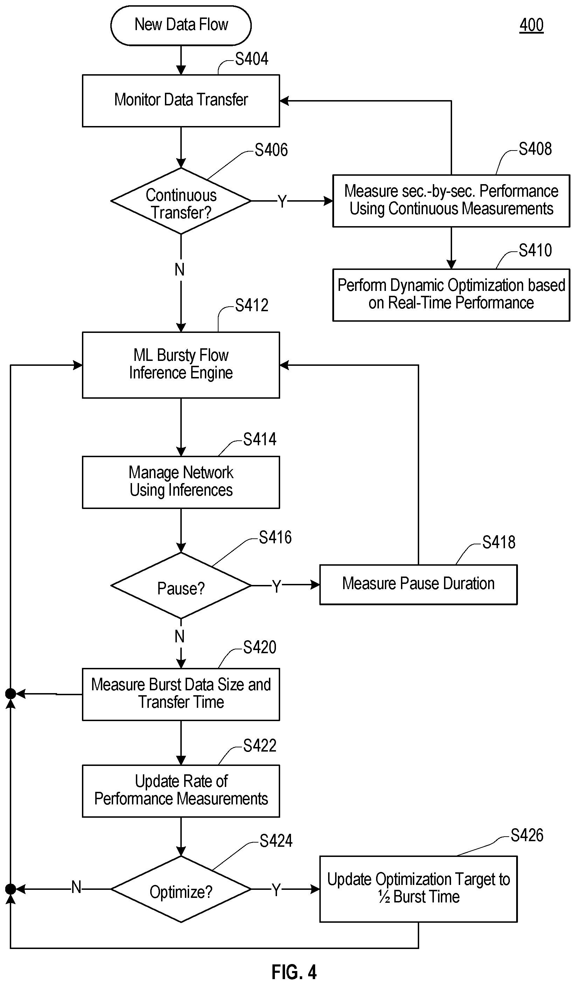

FIG. 4 illustrates a process 400 for monitoring data transfers according to an embodiment.

At step S404, the process 400 monitors a data transfer on a network. Monitoring a data transfer may include identifying data packets that are included in the data transfer and collecting information such as size and timing about those packets. Because technologies for monitoring a data transfer are widely known in the related arts, details thereof are omitted for brevity.

At step S406, the process 400 determines whether the data transfer is a continuous data transfer or a bursty data transfer, such as by monitoring the duration of substantial gaps in time between the data packets in the data transfer, as described with respect to FIG. 3, above.

When the process 400 determines at step S406 that the data transfer is a continuous data transfer, the process 400 proceeds to step S408; otherwise the process 400 proceeds to step S412.

At step S408, the process 400 measures the second-by-second performance of the data transfer using continuous data measurements. The continuous data measurements may include measurements taken during step S404. The process 400 may then at step S410 perform dynamic optimization of the data transfer based on the second-by-second ("Real-Time") performance. Subsequently or in parallel, the process 400 may return to step S404 to continue monitoring the data transfer.

At step S412, measurements of the data transfer are provided as input to a machine learning (ML) Bursty Flow Inference Engine. The measurements provided to the ML Bursty Flow Inference Engine may include, for example, an ordered series of burst and pause measurements, including burst duration and burst size measurements. In addition to or instead of the above, the measurements provided may include statistical properties such as a mean, average, standard deviation, percentile value, or combinations thereof of burst measurements, a mean, average, standard deviation, percentile value, or combinations thereof of pause measurements, or both. Here, a percentile value may be a percentage of the measured data that fall within a predetermined range, or a range that a given percentage of the measured data that fall within. One or more previous inferences produced by the ML Bursty Flow Inference Engine about the data transfer may also be provided as input to the ML Bursty Flow Inference Engine.

The ML techniques used by the ML Bursty Flow Inference Engine may include a neural network, such as a feed-forward neural network, a convolutional neural network, a recurrent neural network, a long short-term memory neural network, or the like, but embodiments are not limited thereto. The neural network may be trained based on a corpus of previous measurements of data transfers and substantially correct inferences for those data transfers. In embodiments, the neural network may at times be retrained using measurements taken during the process 400.

The ML Bursty Flow Inference Engine infers characteristics of the data transfer (such as an inferred target pause duration, an inferred burst duration, an inferred burst size, an inferred data remaining to transfer, and the like, or combinations thereof) based on the inputs using the ML techniques. The inferences may also include the type of data (such as streaming video, video conferencing, file transfer, and so on) being carried by the data transfer, a level of service (such as normal, high-priority, or best-effort) associated with the data transfer, or the like, but embodiments are not limited thereto. The inferences may also include the type of bursty data session based on the target pause, such as, for example, classifying a session as one of a short form video, a medium form video, or a long form video based on target pause being less than one second, a single-digit number of seconds, or more than a two-digit number of seconds, respectively. The inferences may also include whether a QoE for the session, either one inferred or provided, is currently sustainable on the network.

Because some uses of bursty data transfers (such as streaming video) have stereotypical behaviors, the ML Bursty Flow Inference Engine may be trained to infer future behavior of a bursty data transfer from the past and current behavior of similar data transfers. Some endpoints of bursty data transfers, such as may be associated with a given range of IP addresses, may also have stereotypical behaviors, and the ML Bursty Flow Inference Engine may be trained to infer future behavior of a bursty data transfer from the past and current behavior of data transfers involving that range of IP address. Furthermore, inferences may be made about bursty data transfers being used for previously-unseen purposes based on the previously observed bursty data transfers that, while being used for other purposes, had similar behaviors.

In embodiments, the inferences made by the ML Bursty Flow Inference Engine may be made without inferring the type of data the bursty data transfers is carrying. In other embodiments, the inferences made by the ML Bursty Flow Inference Engine include the type of data being carried by a bursty data transfer. The network and/or the bursty data transfer may then be managed using that inference.

Training (and in some embodiments retraining) of the ML Bursty Flow Inference Engine may be performed using techniques known in the related arts, and accordingly the details thereof are omitted for brevity.

At S414, the process 400 manages the network according to the characteristics of the data transfer inferred by the ML Bursty Flow Inference Engine at step S412. In another embodiment, the network may be managed by a process other than the process 400 using inferences from the ML Bursty Flow Inference Engine provided by the process 400.

Managing the network may include managing the data transfer to achieve target performance such as by altering a priority or a routing of the data transfer or by throttling the data transfer. Managing the network may include managing other network activities in light of the inferred predicted behavior of the data transfer, such as by scheduling another data transfer to occur during a predicted pause in the data transfer. Managing the network may also include performing actions in response to inferring that a QoE for the data transfer is not currently sustainable on the network, as described above.

At S416, the process 400 determines whether a pause in the data transfer has occurred. A pause may be determined to occur according to an amount of time elapsed since a most-recent data packet of the data transfer, or in some embodiments an amount of time elapsed since a most-recent significant data packet of the data transfer (as discussed above). When the process 400 determines that a pause has occurred, the process 400 proceeds to step S418; otherwise the process 400 proceeds to step S420.

At step S418, the process 400 measures the pause duration by measuring an amount of time between the most-recent data packet of the data transfer and a next subsequent data packet of the data transfer, or in some embodiments an amount of time between the most-recent significant data packet of the data transfer and a next subsequent significant data packet of the data transfer.

The process 400 may then returns to step S412 with the measurement of the pause duration added to the measurements provided as input to the ML bursty flow inference engine, and produce new inferences that may be used for subsequent management of the network. In embodiments, the new inferences may include a new Target Pause Duration.

At step S420, the process 400 performs performance measurements of a data burst of the data transfer while managing the data transfer according to the inferences previously produced by the ML bursty flow inference engine in the previous execution of step S412. The measurements may include a duration of the data burst and a size of the data transferred by the data burst, but embodiments are not limited thereto.

The process 400 may then returns to step S412 with the performance measurement of the burst added to the measurements provided as input to the ML bursty flow inference engine, and produce new inferences that may be used for subsequent management of the network.

In parallel or as an alternative to proceeding to step S412, the process 400 may at S420 proceed to S422.

At step S422, the process 400 may alter the rate at which performance measurements are taken for the data transfer. For example, if the interval at which performance measurements are being taken for the data transfer is substantially less than or greater than one-half a measured (or in other embodiments, an inferred) burst duration, the rate at which performance measurements may be updated to correspond to half the burst duration.

At step S424, the process 400 determines whether to perform certain optimizations. For example, if in step S422 the process 400 made a substantial change in the rate of performance measurements, the process 400 may determine to perform optimizations based on that change.

When at step S424 the process 400 determines to perform optimizations, the process 400 proceeds to step S426; otherwise, the process 400 may proceed to step S412.

At step S426, the process 400 changes one or more optimization targets in accordance with the substantial change mentioned with respect to step S424. For example, in a case wherein an inferred burst duration becomes substantially shorter (which may cause a rate of performance measurements to be increased) the process 400 may increase a target burst transfer rate for bursts of the data transfer in order to achieve an overall target transfer rate for the data transfer. For another example, in a case wherein an inferred burst duration becomes substantially longer (which may cause a rate of performance measurements to be decreased) the process 400 may decrease a target burst transfer rate for bursts of the data transfer in order to achieve the overall target transfer rate for the data transfer while reducing unnecessary consumption of network resources by the bursts of the data transfer.

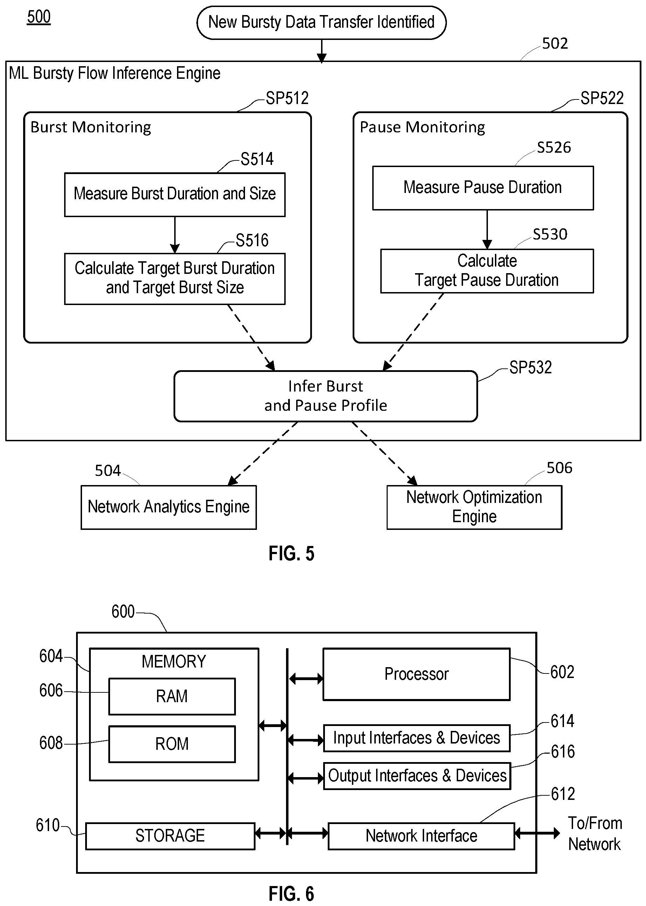

FIG. 5 illustrates a process 500 for monitoring and optimizing a network using data transfer monitoring according to an embodiment. The process 500 may correspond to a process performed as part of the process 400 of FIG. 4.

The process 500 incorporates an ML Bursty Flow Inference Engine 502 to make inferences about a bursty data transfer from measurements of the bursty data transfer, and provides the inferences to a Network Analytics Engine 504 and a Network Optimization Engine 506.

The ML Bursty Flow Inference Engine 502 comprises three subprocesses: a burst monitoring subprocess SP512, a pause monitoring subprocess SP522, and a profile inference subprocess SP532.

The burst monitoring subprocess SP512 is invoked when a burst of the bursty data transfer is detected. The burst may be detected during a pause when a data packet (or, in some embodiments, a significant data packet) of the bursty data transfer is detected.

At step S514, the burst monitoring subprocess SP512 measures the duration and size of the burst. The measuring begin when the burst is first detected, and ends when a pause of the bursty data transfer is detected. The measurements may also include or be based on a packet count, packet durations, packet sizes, packet arrival times, or combinations thereof, among other information.

At the end of the measuring of the burst, at step S516 the target burst duration and a target burst size may be calculated based on the measurements taken in step S514. The calculation of the target burst duration and the target burst size may be a recalculation of the target burst duration and a target burst size. In some embodiments the target burst duration, the target burst size, or both may be recalculated based on their previous values and the measurements taken in step S514. In some embodiments, the target burst duration, the target burst size, or both may be recalculated based on the measurements taken in the most recent performance of step S514 and measurements taken in one or more earlier performances of step S514.

After the target burst duration and the target burst size are calculated or recalculated in step S516, they are provided to profile inference subprocess SP532.

The pause monitoring subprocess SP522 is invoked when a pause of the bursty data transfer is detected. The pause may be detected when a time elapsed since a most recent data packet (or, in some embodiments, a most recent significant data packet) of the bursty data transfer exceeds a threshold value.

At step S526, the pause monitoring subprocess SP522 measures the duration of the pause. The measuring begin when the pause is first detected, and ends when a burst of the bursty data transfer is detected.

At the end of the measuring, at step S530 the target pause duration may be calculated based on the measurements taken in step S526. The calculation of the target pause duration may be a recalculation of the target pause duration. In some embodiments the target pause duration may be recalculated based on its previous values and the measurements taken in step S526. In some embodiments, the target pause duration may be recalculated based on the measurements taken in the most recent performance of step S526 and measurements taken in one or more earlier performances of step S526.

After the target pause duration is calculated or recalculated in step S530, it is provided to profile inference subprocess SP532.

The profile inference subprocess SP532 is invoked whenever new values for the target burst duration, the target burst size, and/or the target pause duration are calculated. The profile inference subprocess SP532 infers, using one or more neural networks, a Flow Burst and Pause Profile from the target burst duration, the target burst size, and/or the target pause duration.

In embodiments, the Flow Burst and Pause Profile is inferred from the target burst duration, the target burst size, and/or the target pause duration, and from a previous value of the Flow Burst and Pause Profile.

In embodiments, the Flow Burst and Pause Profile includes a Flow Burst Profile and a Flow Pause Profile. In some such embodiments, the Flow Burst Profile is inferred from one or more burst durations and one or more burst sizes, and the Flow Pause Profile is inferred from one or more pause durations. In other such embodiments, each of the Flow Burst Profile and the Flow Pause Profile are inferred from all three of the burst durations, the burst sizes, and the pause duration. Furthermore, other measurements and previous inferences regarding a data transfer may be used to infer the Flow Burst Profile, the Flow Pause Profile, or both.

The inferred Flow Burst and Pause Profile may be provided to the Network Analytics Engine 504, the Network Optimization Engine 506, or both. The Network Analytics Engine 504, the Network Optimization Engine 506, or both may then manage and/or optimize the network and the bursty data transfer based on the Flow Burst and Pause Profile.

FIG. 6 illustrates an apparatus 600 for monitoring data transfers, monitoring and optimizing a network using data transfer monitoring, or both according to an embodiment.

The apparatus 600 may implement comprise a computer system and may implement an embodiment by, for example, executing computer programming instructions stored in a non-transitory computer readable medium.

The apparatus 600 may include one or more of a processor 602, a memory 604, input interfaces and devices 614, output interfaces and devices 616, and a storage 610, each of which communicates with each other through a bus, fabric, or other interconnect technology. The apparatus 600 may also include one or more network interfaces 612 coupled to a network. For example, when the apparatus 600 is used to implement a router or gateway, the apparatus 600 may include a network interface 612 for each physical layer network connection of the apparatus 600.

The processor 602 may be a central processing unit (CPU) or a semiconductor device that executes processing instructions stored in the memory 604 and/or the storage 610. The memory 604 and the storage 610 may include various forms of volatile or non-volatile storage media. For example, the memory 604 may include a read-only memory (ROM) 608 and a random access memory (RAM) 606, and the storage may include a Hard Disk Drive (HDD), a Solid State Drive (SSD), or the like.

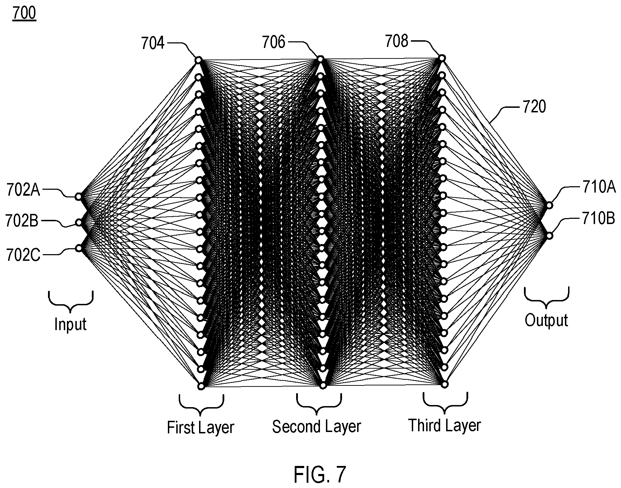

FIG. 7 illustrates in simplified form a neural network 700 according to an embodiment. The neural network 700 represents a substantially simplified version of a neural network such as may be employed in the profile inference subprocess SP532 of FIG. 5.

The neural network 700 comprises an input layer, a first layer, a second layer, a third layer, and an output layer.

The input layer includes first, second, and third input nodes 702A, 702B, and 702C, which respectively receive a measurements of a bursty data transfer. Although FIG. 7 shows three input nodes, embodiments are not limited thereto. In some an embodiments, the information received by respective input nodes of the neural network 700 may include a burst duration target and a burst size target of a bursty data transfer; in other embodiments, the information may include a pause duration target of the bursty data transfer; and in other embodiments, the information may include the burst duration target, the burst size target, and the pause duration target, but embodiments are not limited thereto.

In some embodiments, the information received by respective input nodes of the neural network 700 may include information from a previous inference produced by the neural network 700 for the bursty data transfer. In some embodiments, other information associated with the data flow being analyzed, such as a data session protocol (e.g., TCP, QUIC, UDP, and so on), one or more Internet IP addresses, a UE identifier, or combinations thereof, are also received by respective input nodes of the neural network 700. Such information may allow the neural network 700 to infer, before the first pause period occurs, a type and/or expected behavior of the data flow based on previous bursty data session profiles.

Each node in the input layer is connected by a unique synapse to every first layer node 704 in the first layer. Although FIG. 7 shows only 20 first layer nodes 704, a practical embodiment of Neural Network 114 would include over 100 (for example, 256) or more first layer nodes 704. Accordingly, several hundred or more synapses, each having a corresponding weight determined by training the neural network 700, would be used to connect the input nodes 702A, 702B, and 702C to the layer 1 nodes 704, and hundreds or more mathematical operations (typically matrix multiplications) collectively using several hundred or more input values would be performed in the first layer.

Each first layer node 704 is connected by a unique synapse to every second layer node 706 in the second layer. Although FIG. 7 shows only 20 second layer nodes 706, a practical embodiment of Neural Network 114 would include over 100 (for example, 256) second layer nodes 706. Accordingly, tens of thousands of synapses or more, each having a corresponding weight determined by training the neural network 700, would be used to connect the first layer nodes 704 to the second layer nodes 706, and hundreds of mathematical operations (typically including matrix multiplications) collectively using tens of thousands of input values would be performed in the second layer.

Each second layer node 706 is connected by a unique synapse to every third layer node 708 in the third layer. Although FIG. 7 shows only 20 third layer nodes 708, a practical embodiment of Neural Network 114 would include over 100 (for example, 256) third layer nodes 708. Accordingly, tens of thousands of synapses or more, each having a corresponding weight determined by training the neural network 700, would be used to connect the second layer nodes 706 to the third layer nodes 708, and hundreds of mathematical operations (typically matrix multiplications) collectively using tens of thousands of input values would be performed in the third layer.

Each third layer node 708 is connected by a unique synapse to each of the first and second output nodes 710 in the output layer. In embodiments, the output layer would include additional output nodes, each corresponding to a feature of a bursty data transfer profile. For example, the features of the bursty data transfer profile may include any or any combination of a target burst duration, a target burst size, a target pause duration, and an indication of type pf data inferred as being carried by the bursty data transfer, and the output layer may include at least one node for each such feature. However, embodiments are not limited thereto.

Accordingly, hundreds of synapses, each having a corresponding weight determined by training the neural network 700, would be used to connect the third layer nodes 708 to the output nodes 710, and several mathematical operations collectively using hundreds of input values would be performed in layer 4.

In illustrative embodiments, a mathematical operation performed by each of the first layer nodes 704, the second layer nodes 706, and the third layer nodes 708 includes a convolution and a linear rectification (relu). In embodiments, a mathematical operation performed by each of the output nodes 710 includes a convolution and a sigmoid function. However, embodiments re not limited to using these particular functions.

Although FIG. 7 illustrates a fully-connected neural network, embodiments are not limited thereto. Furthermore, although FIG. 7 illustrates a neural network having three layers, embodiments are not limited thereto and may have more or fewer layer.

Embodiments may detect a bursty data transfer on a data communication network, infer, using machine learning, a flow burst and pause profile of the bursty data transfer using measurements of the bursty data transfer, and manage the data communication network according to the flow burst and pause profile.

Embodiments may provide a system configured to detect a bursty data transfer on a data communication network, infer, using machine learning, a flow burst and pause profile of the bursty data transfer using measurements of the bursty data transfer, and manage the data communication network according to the flow burst and pause profile.

Embodiments may improve the management of a data communication network by inferring characteristics of bursty data transfers occurring on the network. Inferred characteristics of a bursty data transfer may include duration of bursts, sizes of bursts, durations of pauses, a type of data being carried by the bursty data transfer, or combinations thereof, but embodiments are not limited thereto.

Embodiments may also improve the performance of bursty data transfers by using machine learning to more accurately predict the amount of network resources that will be needed to perform the bursty data transfer and allocating the network resources accordingly.

Embodiments may also improve the performance of non-bursty data transfers by using machine learning to more accurately predict the network resources that will be needed to perform bursty data transfers so that the allocation of unnecessary amounts of network resources to bursty data transfers may be avoided, leaving more network resource for non-bursty data transfers.

While this invention has been described in connection with what is presently considered to be practical embodiments, embodiments are not limited to the disclosed embodiments, but, on the contrary, may include various modifications and equivalent arrangements included within the spirit and scope of the appended claims. The order of operations described in a process is illustrative and some operations may be re-ordered. Further, two or more embodiments may be combined.

## Claims

1. A method for managing a data communication network, the method comprising:
detecting a bursty data transfer on the data communication network;
inferring, using machine learning, a flow burst and pause profile of the bursty data transfer using measurements of the bursty data transfer; and
managing the data communication network according to the flow burst and pause profile.

2. The method of claim 1, wherein detecting the bursty data transfer comprises detecting that a data transfer that was a continuous data transfer has become a bursty data transfer.

3. The method of claim 1, wherein inferring, using machine learning, the flow burst and pause profile comprises providing the measurements of the bursty data transfer to a neural network, the neural network configured to produce the flow burst and pause profile.

4. The method of claim 3, wherein inferring, using machine learning, the flow burst and pause profile comprises providing value determined by one or more previously inferred flow burst and pause profiles of the bursty data transfer to the neural network.

5. The method of claim 1, wherein managing the data communication network according to the flow burst and pause profile comprises managing the bursty data transfer according to the flow burst and pause profile.

6. The method of claim 1, wherein managing the data communication network according to the flow burst and pause profile comprises managing a data transfer other the bursty data transfer according to the flow burst and pause profile.

7. The method of claim 1, wherein the measurements of the bursty data transfer include one or more burst duration measurements, one or more burst size measurements, or both.

8. The method of claim 1, wherein the measurements of the bursty data transfer include one or more pause duration measurements.

9. The method of claim 1, wherein the inferred flow burst and pause profile includes an inference of a data type being carried by the bursty data transfer.

10. The method of claim 1, wherein the inferred flow burst and pause profile includes an inferred target burst duration, an inferred target burst size, or both for the bursty data transfer.

11. The method of claim 1, wherein the inferred flow burst and pause profile includes an inferred target pause duration for the bursty data transfer.

12. A non-transient Computer-Readable Media (CRM) comprising computer programming instructions that, when executed method by a processor, cause the performance of steps for managing a data communication network, the steps comprising:
detecting a bursty data transfer on the data communication network;
inferring, using machine learning, a flow burst and pause profile of the bursty data transfer using measurements of the bursty data transfer; and
managing the data communication network according to the flow burst and pause profile.

13. The non-transient CRM of claim 12, wherein detecting the bursty data transfer comprises detecting that a data transfer that was a continuous data transfer has become a bursty data transfer.

14. The non-transient CRM of claim 12, wherein inferring, using machine learning, the flow burst and pause profile comprises providing the measurements of the bursty data transfer to a neural network, the neural network configured to produce the flow burst and pause profile.

15. The non-transient CRM of claim 14, wherein inferring, using machine learning, the flow burst and pause profile comprises providing value determined by one or more previously inferred flow burst and pause profiles of the bursty data transfer to the neural network.

16. A system for managing a data communication network, the system configured to perform steps comprising:
detecting a bursty data transfer on the data communication network;
inferring, using machine learning, a flow burst and pause profile of the bursty data transfer using measurements of the bursty data transfer; and
managing the data communication network according to the flow burst and pause profile.
